(19) **Europäisches Patentamt European Patent Office Office européen des brevets**

(11) **EP 3 299 186 B1**

(12) **EUROPEAN PATENT SPECIFICATION**

(45) Date of publication and mention of the grant of the patent:
**05.06.2019 Bulletin 2019/23**

(51) Int Cl.:
***B60C 15/06*** *(2006.01)*    ***B60C 15/02*** *(2006.01)*

(21) Application number: **16796287.7**

(22) Date of filing: **28.04.2016**

(86) International application number:
**PCT/JP2016/063388**

(87) International publication number:
**WO 2016/185893 (24.11.2016 Gazette 2016/47)**

(54) **PNEUMATIC RADIAL TIRE FOR HEAVY LOADS**

RADIALLUFTREIFEN FÜR SCHWERE LASTEN

PNEUMATIQUE RADIAL POUR CHARGES LOURDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2015 JP 2015102517**

(43) Date of publication of application:
**28.03.2018 Bulletin 2018/13**

(73) Proprietor: **Bridgestone Corporation Tokyo 104-8340 (JP)**

(72) Inventor: **SATO, Akihito Tokyo 104-8340 (JP)**

(74) Representative: **Oxley, Robin John George Marks & Clerk LLP 15 Fetter Lane London EC4A 1BW (GB)**

(56) References cited:
**EP-A1- 1 911 607     EP-A1- 2 796 300 JP-A- H04 183 618     JP-A- H05 155 208 JP-A- 2001 206 027     JP-A- 2008 222 145 JP-A- 2008 222 161     JP-A- 2012 076 669 JP-A- 2012 106 531     JP-A- 2014 040 183**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a heavy load pneumatic radial tire especially suitable as a construction vehicle tire. EP 1 911 607 A1 discloses a heavy load pneumatic radial tire according to the preamble of claim 1.

Background Art

A heavy load pneumatic radial tire used for a construction vehicle or the like needs to have sufficient tightening margins secured to the bead base portion of the tire with respect to the bead sheet portion of the rim in order to prevent slipping between the rim and the tire at the time of rolling of the tire and maintain airtightness between the rim and the tire.

It is especially important for a tubeless tire, unlike a tube tire, to maintain airtightness in this manner in order to hold the air pressure inside the tire at the initial pressure set by air filling as long as possible in expectation of the effect of air sealing between the rim and the bead portion.

Citation List

Patent Literature

Patent Literature 1: JP 2000-233613 A
Patent Literature 2: JP 2001-206027 A

Summary of Invention

Technical Problem

When a heavy load pneumatic radial tire provided with sufficient tightening margins is mounted to a rim, the diameter of a bead base portion increases, that is, a rubber chafer corresponding to the bead base portion undergoes apparent compression (because rubber is incompressible). At this time, much of the rubber forming the rubber chafer undergoes flow deformation in the directions of a bead heel portion and a bead toe portion.

At the bead heel portion, in particular, the flow deformation of the rubber is restricted by a rim flange, and hence the corresponding rubber portion undergoes flow deformation toward the outside in the tire radial direction. Because a reinforcing cord layer (for example, a wire chafer) adjacent to the bead core side of the rubber chafer restrains the flow deformation of the rubber chafer, shear strain occurs in the rubber chafer.

With an increase in load at the time of rolling of the tire, the movement of a carcass in the radial direction increases, and the flow deformation of the rubber chafer increases, resulting in an increase in shear strain. This tends to cause a separation failure at the boundary surface between the rubber chafer and the wire chafer in an area corresponding to the bead heel portion at which the shear strain in the rubber chafer becomes the maximum.

The present invention has been made in consideration of the above problems, and an object of the present invention is to provide a heavy load pneumatic radial tire that can prevent slipping by securing sufficient tightening margins to the bead portion and prevent the occurrence of separation between the rubber chafer and the wire chafer at a bead heel portion.

Solution to Problem

To solve the problems described above, a heavy load pneumatic radial tire according to an aspect of the present invention includes a carcass folded back at a bead core, and a wire chafer arranged on an outer circumference of the carcass and folded back around the bead core. A reinforcing rubber layer having a lower elastic modulus than at least one of coating rubber forming the carcass and coating rubber forming the wire chafer is arranged between the carcass and the wire chafer. An area where the reinforcing rubber layer is arranged is an area corresponding to at least part of a range of rotational angles of -45° to 90° around a bead core center to outward in a tire widthwise direction with reference to a straight line extending inward in a tire radial direction from the bead core center, intersecting orthogonally to the tire widthwise direction, and intersecting with the wire chafer, wherein 0° indicates the position of the wire chafer underneath portion (22b) and the rotational angle ($\theta$) around the bead core center (12c) from the wire chafer underneath portion (22b) to a tire inside (I) is indicated with a minus sign.

Advantageous Effects of Invention

The aspect of the present invention provides a heavy load pneumatic radial tire that can prevent slipping by securing sufficient tightening margins to the bead portion and prevent the occurrence of separation between the rubber chafer and the wire chafer at a bead heel portion.

Brief Description of Drawings

Fig. 1 is a partially enlarged sectional view of a bead portion of a heavy load pneumatic radial tire according to the first embodiment in a cross-section in the tire widthwise direction, which passes through the central axis of the tire.
FIG. 2 is an explanatory chart showing experimental results of Experimental Example 1.
Fig. 3 is a graph chart showing analytical calculation results.

Fig. 4 is a partially enlarged sectional view of a bead portion of a heavy load pneumatic radial tire according to the second embodiment in a cross-section in the tire widthwise direction, which passes through the central axis of the tire.

Fig. 5 is an enlarged view of the main part of Fig. 4.

Fig. 6 is an explanatory chart showing experimental results of Experimental Example 1.

Description of Embodiments

Hereinafter, embodiments of the present invention will be described with reference to the accompanying drawings. In the following description, the same or similar parts are denoted by the same or similar reference numerals, and the detailed description thereof is appropriately omitted.

In addition, the following embodiments are examples for embodying the technical idea of the present invention, and the embodiments of the present invention do not specify the material, shape, structure, arrangement, etc. of constituent parts to the followings. Further, in the embodiments, the numerical values when the conditions are not specified are numerical values in the no-load state in which the rim is assembled to the regular rim and the internal pressure is 50 kPa.

[First Embodiment]

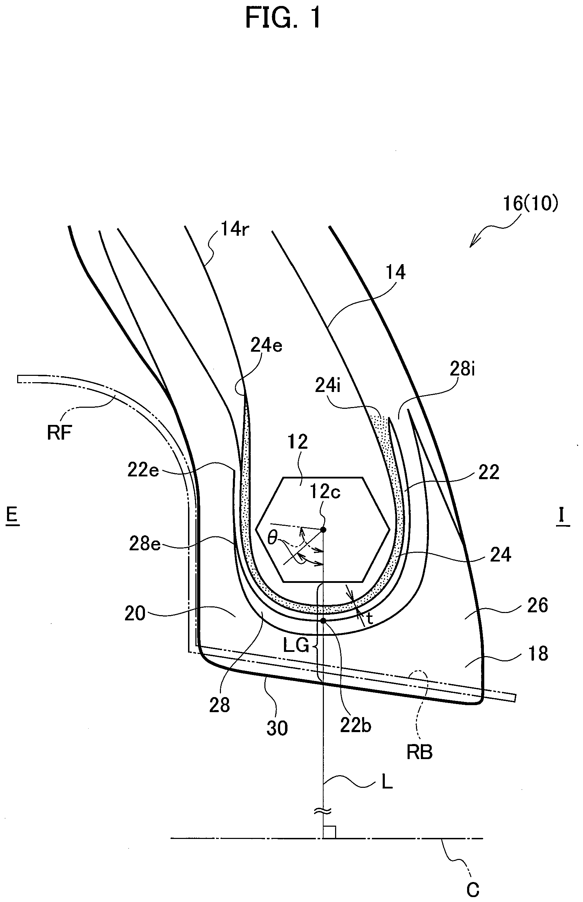

The first embodiment will be described first. Fig. 1 is a partially enlarged sectional view of a bead portion of a heavy load pneumatic radial tire according to the first embodiment in a cross-section in the tire widthwise direction, which passes through the central axis of the tire.

A heavy load pneumatic radial tire 10 according to the first embodiment includes a carcass (carcass ply) 14 folded back at a bead core 12. In the first embodiment, the height of a folded portion 14r of the carcass 14 reaches 40% to 60% of the radial direction cross-section height of the tire.

In addition, the heavy load pneumatic radial tire 10 includes at least two belt layers (not shown) arranged outside the carcass 14 in the tire radial direction and a tread rubber layer (not shown) arranged outside the belt layers in the tire radial direction.

A bead portion 16 includes a bead toe portion 18, a bead heel portion 20, and a wire chafer 22 formed from a steel cord reinforcing layer arranged on the outer circumference of the carcass 14. The wire chafer 22 is folded back around the bead core 12. The type of rubber used as coating rubber forming the wire chafer 22 is the same as that used for a rubber chafer 26 to describe later.

In addition, the heavy load pneumatic radial tire 10 includes a reinforcing rubber layer 24 between the carcass 14 and the wire chafer 22. The reinforcing rubber layer 24 has an elastic modulus lower than that of at least one of coating rubber forming the carcass 14 and coating rubber forming the wire chafer 22.

In the first embodiment, the type of rubber used for the reinforcing rubber layer 24 is the same as that of an inner liner, and has an elastic modulus of 8 MPa to 14 MPa at 300% elongation. The "elastic modulus at 300% elongation" of the inner liner and the reinforcing rubber layer 24 is a measurement complying with DIN standards, which is a tensile elastic modulus at 300% elongation obtained by conducting a tensile test at a tension rate of 100 (mm/min) with respect to a test specimen obtained by slicing a rubber material with a thickness of about 0.5 mm and punching the sliced piece by using a blade die complying with DIN standards.

A thickness t of the reinforcing rubber layer 24 is set to at least 0.5 mm or more except for end portions. Note that the range of each of end portions 24e and 24i of the reinforcing rubber layer 24 corresponds to the range of 10 mm from an end face of the reinforcing rubber layer 24.

An area where the reinforcing rubber layer 24 is arranged is an entire area corresponding to a range of rotational angles θ of -120° to 120° around a center 12c from a wire chafer underneath portion 22b located immediately below a center 12c of the bead core 12 to an tire outside E (toward a rim flange RF). In other words, the area where the reinforcing rubber layer 24 is arranged is the entire area corresponding to the range of the rotational angles θ of -120° to 120° around the center 12c of the bead core 12 outward in the tire widthwise direction with reference to a straight line that extends from the center 12c of the bead core 12, intersects the tire widthwise direction at a right angle, extends toward the inner side in the tire radial direction, and intersects the wire chafer 22. This range is set in accordance with the dimensions of the bead core 12, the dimensions of the tire, and the like. Note that the range can be an area forming at least part of the range of -45° to 90°.

In this case, a straight line L connecting the center 12c of the bead core 12 and the wire chafer underneath portion 22b is orthogonal to a tire axial direction C (a straight line passing through the tire center). In addition, 0° indicates the position of the wire chafer underneath portion 22b. Accordingly, the rotational angle θ around the center 12c from the wire chafer underneath portion 22b to a tire inside I is indicated with a minus sign.

The first embodiment can achieve a reduction in shear strain near the boundary surface between the rubber chafer 26 of the bead heel portion 20 and the wire chafer 22, which poses a problem in the conventional structure. This can effectively prevent the occurrence of a separation failure (tire failure) between the rubber chafer 26 and the wire chafer 22. Setting the range of the rotational angles θ to a range smaller than that described above tends to make it difficult to effectively prevent the occurrence of a tire failure.

The area where the reinforcing rubber layer 24 is arranged is preferably an area that is at least part of the range of the rotational angles θ of -150° to 150°, and preferably includes the entire area ranging from -120° to 120°. This can further effectively prevent the occurrence of a tire failure. Note that when the above area is set to an area that is at least part of the above range of the rotational angles θ of -45° to 90°, the area preferably includes an entire area ranging from 45° to 80° in consideration of further effectively preventing the occurrence of a tire failure.

An outside reinforcing layer 28 formed from a rubber material (that is, the same type of rubber as that used for the inner liner) with an elastic modulus at 300% elongation ranging from 8 MPa to 14 MPa is arranged on the outer circumference of the wire chafer 22.

The thickness of the outside reinforcing layer 28 is set to at least 1.0 mm or more except for end portions. In addition, the outside reinforcing layer 28 is separated from a bead base 30 by at least 1 mm or more. Note that each of the ranges of end portions 28e and 28i of the outside reinforcing layer 28 is located within the range of 10 mm from the end face.

The rubber chafer 26 having an elastic modulus at 300% elongation ranging from 9 MPa to 15 MPa is arranged between the wire chafer 22 and the bead base 30. In this case, "elastic modulus at 300% elongation" of the rubber chafer 26 is a tensile elastic modulus (M300) at 300% elongation at room temperature (25°), which is measured in conformity to JIS K6301.

(Operation and Effect)

The operation and effect of the first embodiment will be described below. As shown in Fig. 1, unlike in the conventional structure, in the first embodiment, the reinforcing rubber layer 24 is arranged between the carcass 14 and the wire chafer 22 throughout the entire area corresponding to the range of the rotational angles θ of -120° to 120° around the center 12c of the bead core 12. This can effectively reduce shear strain near the boundary surface between the rubber chafer 26 of the bead heel portion 20 and the wire chafer 22 at the time of running as compared with the prior art. It is, therefore, possible to prevent rim slipping by securing sufficient tightening margins to the bead portion 16 and effectively prevent the occurrence of separation between the rubber chafer 26 of the bead heel portion 20 and the wire chafer 22.

Assume that in this case, a "normal rim" indicates a standard rim defined by the following standards in accordance with the size of a tire. Assume also that a "normal internal pressure" indicates an air pressure corresponding to the maximum load carrying capacity of a single tire with an applicable size written in the following standards. Furthermore, assume that a "normal load" indicates the maximum load (maximum load carrying capacity) of a single tire with an applicable size in the following standards. The standards in this case are industrial standards effective in areas where tires are produced or used, and include, for example, "JATMA YEAR BOOK" published by THE JAPAN AUTOMOBILE TIRE MANUFACTURERS ASSOCIATION in Japan, "YEAR BOOK" published by THE TIRE AND RIM ASSOCIATION INC. in the United States, and "STANDARD MANUAL" published by The European Tyre and Rim Technical Organisation in Europe. Note that in this specification, the following description and the like are made in consideration of these standards.

In addition, the height of the folded portion 14r of the carcass 14 reaches 40% to 60% of the radial direction cross-section height of the tire. This can further effectively prevent the removal of the carcass 14.

The outside reinforcing layer 28 formed from a rubber material (that is, the same type of rubber as that used for the inner liner) having an elastic modulus at 300% elongation in the range of 8MPa to 14 MPa is arranged on the outer circumference of the wire chafer 22. This structure obtains a buffering effect from the outside reinforcing layer 28 and can further effectively prevent the occurrence of a separation failure between the rubber chafer 26 and the wire chafer 22.

The thickness of the outside reinforcing layer 28 is set to at least 1.0 mm or more except for the end portions 28e and 28i. This makes it possible to easily obtain a sufficient effect from the outside reinforcing layer 28.

In addition, the outside reinforcing layer 28 is separated from the bead base 30 by at least 1 mm or more. This easily accentuates the effect obtained by arranging the outside reinforcing layer 28.

Note that organic fiber cords may be arranged in the outside reinforcing layer 28. This can effectively increase the strength of the outside reinforcing layer 28 without increasing the thickness of the outside reinforcing layer 28. In addition, the same effect can be obtained by arranging organic fiber cords between the wire chafer and the outside reinforcing layer 28.

In addition, in order to sufficiently reduce the weight of the heavy load pneumatic radial tire 10, the compression ratio of the bead portion 16 obtained when being mounted to the rim is preferably set to 0.3 or more. In this case, the compression ratio of the bead portion 16, as shown in Fig. 1, is defined with respect to the rubber thickness of the overall rubber portion located closer to a tire radial direction inside LG than the bead core 12 on a perpendicular line L (tire radial direction line segment) passing through the center 12c of the bead core 12. More specifically, the compression ratio is defined as the ratio of the rubber thickness of the rubber portion after being compressed/deformed by a rim base RB (inclined beat sheet portion) to the rubber thickness of the rubber portion before being compressed/deformed by the rim base RB. That is, the compression ratio is defined as the value obtained by dividing the rubber thickness after compression/deformation by the rubber thickness before compression/deformation. Assume that a rubber thickness is the thickness obtained by subtracting a cord diameter from the thickness of a constituent member. For example, when reinforcing cords are arranged on the carcass 14 in the form of one layer, the rubber thickness of the carcass 14 is the value obtained by subtracting the diameter of the single cord from the thickness of the carcass 14. When reinforcing cords are arranged on the wire chafer 22 in the form of one layer, the rubber thickness of the wire chafer 22 is the value obtained by subtracting the diameter of the single cord from the thickness of the wire chafer 22.

[Experimental Example 1]

The present inventors conducted an experiment for performance evaluation by using an example tire (to be referred to as Example 1 hereinafter) as an example of the heavy load pneumatic radial tire 10 according to the first embodiment and a prior art tire (to be referred to as Prior Art 1 hereinafter). According to Example 1, a sheet-like member (corresponding to about one sheet) having a width t of 100 mm and a thickness of 1.65 mm was arranged as a reinforcing rubber layer in an area ranging from a wire chafer end 22e on a rim flange RF to a position immediately below the center 12c of the bead core 12. Prior Art 1 does not have such a reinforcing rubber layer.

In this experimental example, Example 1 and Prior Art 1 each were mounted to a normal rim, and shear strain near the boundary surface between the rubber chafer 26 of the bead heel portion 20 and the wire chafer 22 was measured at the time of rolling, the measured value was converted into an evaluation index, thereby performing performance evaluation.

The following are experimental conditions:

    tire size: 59/80R63 VRF
    rim size: 44.00/5.0
    internal pressure: 600 kPa
    load: 100.0 ton

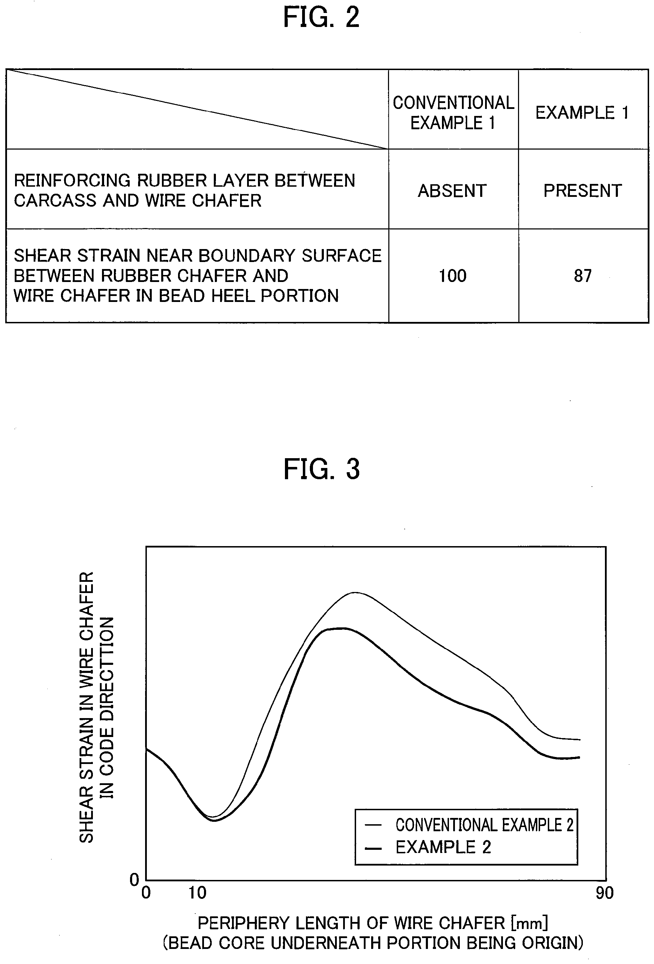

Fig. 2 shows the measurement results and evaluation results. The evaluation indices shown in Fig. 2 include 100 as an evaluation index concerning Prior Art 1, and the evaluation index concerning Example 1 is written as a relative value corresponding to the evaluation index concerning Prior Art 1. Smaller indices indicate better results.

As shown in Fig. 2, the index concerning Example 1 was 87, which was a much better result than that of Prior Art 1. It was, therefore, found that sandwiching the reinforcing rubber layer 24, whose thickness t was 1.65 mm, between the carcass 14 and the wire chafer 22 made it possible to buffer the movement of the wire chafer 22 caused by a change in the tensile force of the carcass 14 and greatly reduce the occurrence of a separation failure between the rubber chafer 26 and the wire chafer 22.

[Analytical Calculation Example]

The prevent inventors also conducted performance evaluation by performing analytical calculations with respect to an embodiment tire (to be referred to as Example 2 hereinafter) as an example of the heavy load pneumatic radial tire 10 according to the first embodiment and a prior art tire (to be referred to as Prior Art 2 hereinafter).

According to Example 2, a reinforcing rubber layer of the same rubber type as that of the inner liner was arranged as the reinforcing rubber layer 24 between the carcass 14 and the wire chafer 22. A sheet-like member (corresponding to about one sheet) having a thickness t of 1.65 mm was arranged as this reinforcing rubber layer in an area ranging from the wire chafer end 22e on the rim flange RF to a position immediately below the center 12c of the bead core 12. Prior Art 2 does not have such a reinforcing rubber layer.

Fig. 3 shows the analytical calculation results. Referring to Fig. 3, the abscissa represents a periphery length which is a length from the wire chafer underneath portion 22b toward the rim flange RF along the wire chafer 22, and the ordinate represents shear strain in the wire chafer 22 in the cord direction, with the wire chafer underneath portion 22b being the origin.

As is obvious from Fig. 3, the results reveals that when the periphery length of the wire chafer 22 falls within the range of 10 mm to 90 mm, Example 2 clearly exhibits smaller shear strain in the wire chafer 22 in the cord direction than Prior Art 2.

In this case, when the periphery length is 10 mm, the rotational angle $\theta$ is 5°; when the periphery length is 30 mm, the rotational angle $\theta$ is 30°; when the periphery length is 50 mm, the rotational angle $\theta$ is 60°; when the periphery length is 70 mm, the rotational angle $\theta$ is 80°; and when the periphery length is 90 mm, the rotational angle $\theta$ is 100°.

Accordingly, all the areas in the range of periphery lengths of 10 mm to 90 mm correspond to all the areas in the range of the rotational angles $\theta$ of 5° to 100°. In addition, even if the tire size differs from that (59/80R63 VRF) in this analytical calculation example, arranging a reinforcing rubber layer having a corresponding size makes it possible to obtain calculation results similar to those in the analytical calculation example within the range of the rotational angles $\theta$ of 5° to 100°.

[Second Embodiment]

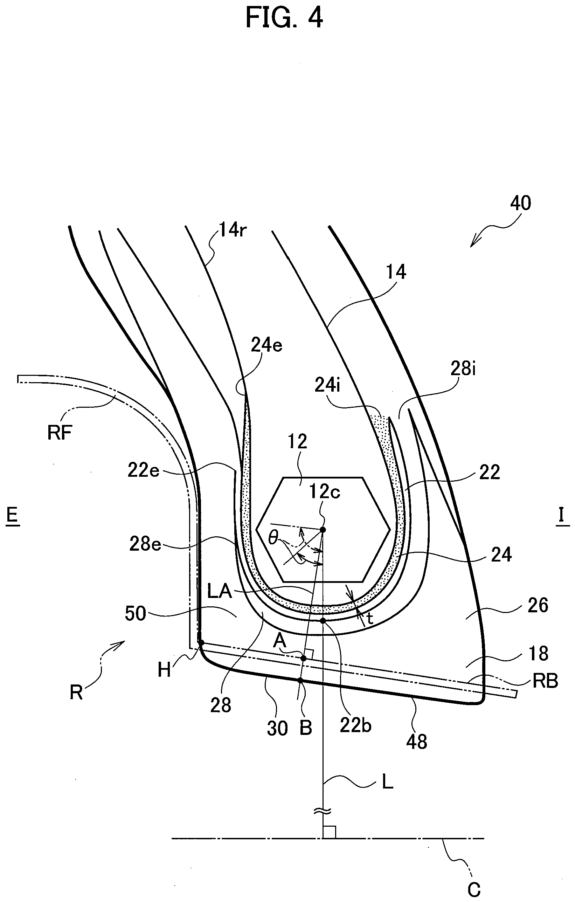

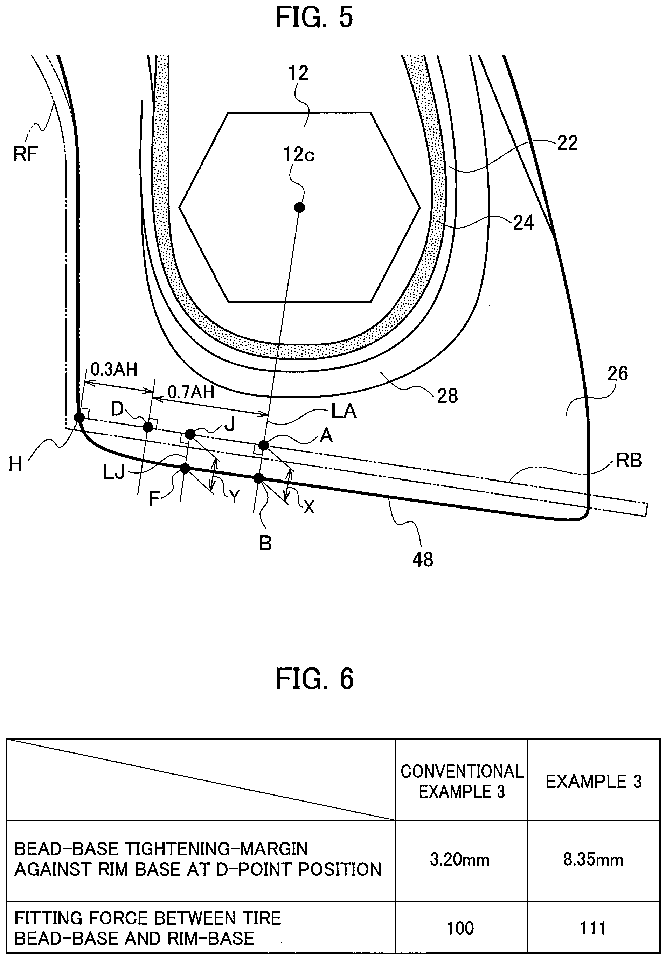

The second embodiment will be described next. Fig. 4 is a partially enlarged sectional view of a bead portion of a heavy load pneumatic radial tire according to the second embodiment in a cross-section in the tire widthwise direction, which passes through the central axis of the tire. Fig. 5 is an enlarged view of the main part of Fig. 4.

A heavy load pneumatic radial tire 40 according to the second embodiment is structured to increase tightening margins at a bead heel portion 50 upon mounting to a normal rim R as compared with the heavy load pneumatic radial tire 10 according to the first embodiment. This structure will be described in detail with reference to Figs. 4 and 5.

A point A is a point of intersection between a perpendicular line LA drawn orthogonally to the rim base RB from the center 12c of the bead core 12 when the tire 40 is assembled to the rim R and the rim base RB. In addition, a point B is a point of intersection between the perpendicular line LA and a bead base 48 when the tire 40 is not assembled to the rim R. Furthermore, a point H is a point of intersection between a rim flange RF and the rim base RB. A point D is a point at which a line segment AH is divided at a ratio of 7 : 3. A point J is an arbitrary point on a line segment AD. A point F is a point of intersection between a straight line LJ passing through the point J extending orthogonal to the rim base RB and the bead base 48.

Letting X be the length of the line segment AB and Y be the length of the line segment JF, Y is 90% or more of X in the entire range of the line segment AD, that is, Y and X satisfy the relation given by

$$Y \geq 0.9X$$

Note that X is, for example, 8.68 mm, and Y is, for example, in the range of 8.35 mm to 8.68 mm.

As described above, the second embodiment adopts the tire structure that increases tightening margins near the bead heel portion 50 as compared with the prior art instead of monotonously increasing tightening margins to the bead base 48 with respect to the rim base RB. This eventually effectively increases the fitting force between the bead base 48 and the rim base RB in the second embodiment. That is, the second embodiment provides the effects of preventing a rim-slipping phenomenon and preventing the occurrence of air leak in addition to the effects obtained by the first embodiment.

[Experimental Example 2]

The present inventors conducted an experiment for performance evaluation by using an example tire (to be referred to as Example 3 hereinafter) as an example of the heavy load pneumatic radial tire 40 according to the second embodiment and a prior art tire (to be referred to as Prior Art 3 hereinafter). In Example 3, the lengths X and Y in Fig. 5 were set to 8.68 mm and 8.35 mm, respectively.

In this experimental example, Example 3 and Prior Art 3 each were mounted to a normal rim, and the tightening margins to the bead base 48 with respect to the rim base RB were measured at the position of the point D and converted into evaluation indices, thereby conducting performance evaluation. Experimental conditions (a tire size, rim size, internal pressure, and load) were the same as those in Experimental Example 1.

Fig. 6 shows the measurement results and the evaluation results. A tightening margin to the bead base 48 with respect to the rim base RB at the position of the point D in Example 3 was 8.35 mm, and a tightening margin to the bead base 48 with respect to the rim base RB at the position of the point D in Prior Art 3 was 3.20 mm.

With regard to the evaluation indices in Fig. 6, the evaluation index concerning Prior Art 3 is 100, and the evaluation index concerning Example 3 is a value relative to the evaluation index concerning Prior Art 3. Larger index values indicate better results. As shown in Fig. 6, the index concerning Example 3 was 111, which was much better than that of Prior Art 3. It was, therefore, found that increasing tightening margins near the bead heel portion as in Example 3 greatly improved the fitting force between the bead base and the rim base.

It should be noted that the present application claims priority to Japanese Patent Application No. 2015-102517, filed on May 20, 2015.

Industrial Applicability

The aspect of the present invention provides a heavy load pneumatic radial tire that can prevent slipping by securing sufficient tightening margins to the bead portion and prevent the occurrence of separation between the rubber chafer and the wire chafer at a bead heel portion.

Reference Signs List

10 HEAVY LOAD PNEUMATIC RADIAL TIRE
12 BEAD CORE
14 CARCASS
14r FOLDED PORTION
16 BEAD PORTION
22 WIRE CHAFER
22b WIRE CHAFER UNDERNEATH PORTION
24 REINFORCING RUBBER LAYER
24e END PORTION
24i END PORTION
28 OUTSIDE REINFORCING LAYER
30 BEAD BASE
40 HEAVY LOAD PNEUMATIC RADIAL TIRE
48 BEAD BASE
50 BEAD HEEL PORTION
LA PERPENDICULAR LINE
LE STRAIGHT LINE
R NORMAL RIM
RB RIM BASE
RF RIM FLANGE

**Claims**

1. A heavy load pneumatic radial tire (10, 40) comprising:

   a carcass (14) folded back at a bead core (12); and

   a wire chafer (22) arranged on an outer circumference of the carcass (14) and folded back around the bead core (12);

   **characterised in that**

   a reinforcing rubber layer (24) having a lower elastic modulus than at least one of coating rubber forming the carcass (14) and coating rubber forming the wire chafer (22) is arranged between the carcass (14) and the wire chafer (22); and **in that**

   an area where the reinforcing rubber layer (24) is arranged is an area corresponding to at least part of a range of rotational angles (θ) of -45° to 90° around a bead core center (12c) to outward in a tire widthwise direction with reference to a straight line (L) extending inward in a tire radial direction (C) from the bead core center (12c), intersecting orthogonally to the tire widthwise direction, and intersecting with the wire chafer (22), wherein 0° indicates the position of the wire chafer underneath portion (22b) and the rotational angle (θ) around the bead core center (12c) from the wire chafer underneath portion (22b) to a tire inside (I) is indicated with a minus sign.

2. The heavy load pneumatic radial tire according to claim 1, wherein the rotational angles cover an entire area corresponding to a range of 45° to 80°.

3. The heavy load pneumatic radial tire according to claim 1 or 2, wherein the reinforcing rubber layer (24) comprises a rubber member having an elastic modulus in a range of 8 MPa to 14 MPa at 300% elongation, and

   a thickness of the reinforcing rubber layer is set to at least 0.5 mm or more except for end portions.

4. The heavy load pneumatic radial tire according to any one of claims 1 to 3, wherein an outside reinforcing layer (28) formed from a rubber material having an elastic modulus in a range of 8 MPa to 14 MPa at 300% elongation is arranged on an outer circumference of the wire chafer,

   a thickness of the outside reinforcing layer is set to at least 1.0 mm or more except for end portions, and the outside reinforcing layer is separated from a bead base by at least 1 mm or more.

5. The heavy load pneumatic radial tire according to claim 4, wherein organic fiber cords are arranged inside the outside reinforcing layer or between the wire chafer and the outside reinforcing layer.

6. The heavy load pneumatic radial tire according to any one of claims 1 to 5, wherein letting a point A be a point of intersection between a perpendicular line drawn orthogonally to the rim base from the center of the bead core when the tire is assembled to the rim and the rim base, a point B be a point of intersection between the perpendicular line and the bead base when the tire is not assembled to the rim, a point H be a point of intersection between a rim flange and the rim base, a point D be a point at which a line segment AH is divided at 7 : 3, a point J be an arbitrary point on a line segment AD, a point F be a point of intersection between a straight line passing through the point J extending orthogonal to the rim base and the bead base, X be a length of a line segment AB, and Y be a length of a line segment JF, a relation given by

$$Y \geq 0.9X$$

is satisfied in an entire range of the line segment AD.

**Patentansprüche**

1. Schwerlast-Radialluftreifen (10, 40), der Folgendes umfasst:

   eine Karkasse (14), die an einem Wulstkern (12) zurückgeklappt ist, und

   ein Draht-Wulstschutzband (22), das auf einem Außenumfang der Karkasse (14) angeordnet und um den Wulstkern (12) zurückgeklappt ist, **dadurch gekennzeichnet, dass**

   eine Verstärkungsgummilage (24), die einen niedrigeren Elastizitätsmodul aufweist als wenigstens eines von einem Überzugsgummi, der die Karkasse (14) bildet, und einem Überzugsgummi, der das Draht-Wulstschutzband (22) bildet, zwischen der Karkasse (14) und dem Draht-Wulstschutzband (22) angeordnet ist, und dadurch, dass

   ein Gebiet, wo die Verstärkungsgummilage (24) angeordnet ist, ein Gebiet ist, entsprechend wenigstens einem Teil eines Bereichs von Drehwinkeln (θ) von -45° bis 90° um eine Wulstkernmitte (12c) nach außen in einer Reifenbreitenrichtung in Bezug auf eine Gerade (L), die sich in einer Reifenradialrichtung (C) von der Wulstkernmitte (12c) nach innen erstreckt, wobei sie sich senkrecht zu der Reifenbreitenrichtung schneidet und sich mit dem Draht-Wulstschutzband (22) schneidet, wobei 0° die Position des Draht-Wulstschutzband-Unterseitenabschnitts (22b) angibt und der Drehwinkel (θ) um die Wulstkernmitte (12c) von dem Draht-Wulstschutzband-Unterseitenabschnitt (22b) zu einer Reifeninnenseite (I) mit einem Minuszeichen angegeben wird.

2. Schwerlast-Radialluftreifen nach Anspruch 1, wobei die Drehwinkel ein gesamtes Gebiet abdecken, das einem Bereich von 45 bis 80° entspricht.

3. Schwerlast-Radialluftreifen nach Anspruch 1 oder 2, wobei die Verstärkungsgummilage (24) ein Gummielement umfasst, das einen Elastizitätsmodul in einem Bereich von 8 MPa bis 14 MPa bei 300 % Dehnung aufweist, und
eine Dicke der Verstärkungsgummilage auf wenigstens 0,5 mm oder mehr mit Ausnahme von Endabschnitten festgesetzt ist.

4. Schwerlast-Radialluftreifen nach einem der Ansprüche 1 bis 3, wobei eine äußere Verstärkungslage (28), die aus einem Gummimaterial geformt ist, das einen Elastizitätsmodul in einem Bereich von 8 MPa bis 14 MPa bei 300 % Dehnung aufweist, auf einem Außenumfang der Draht-Wulstschutzbandes angeordnet ist,
eine Dicke der äußeren Verstärkungslage auf wenigstens 1,0 mm oder mehr mit Ausnahme von Endabschnitten festgesetzt ist und
die äußere Verstärkungslage um wenigstens 1 mm oder mehr von einer Wulstbasis getrennt ist.

5. Schwerlast-Radialluftreifen nach Anspruch 4, wobei organische Faserkords innerhalb der äußeren Verstärkungslage oder zwischen dem Draht-Wulstschutzband und der äußeren Verstärkungslage angeordnet sind.

6. Schwerlast-Radialluftreifen nach einem der Ansprüche 1 bis 5, wobei
angenommen, ein Punkt A ist ein Schnittpunkt zwischen einer senkrechten Linie, die senkrecht zu der Felgenbasis von der Mitte des Wulstkerns gezogen wird, wenn der Reifen auf der Felge montiert ist, und der Felgenbasis, ein Punkt B ist ein Schnittpunkt zwischen der senkrechten Linie und der Wulstbasis, wenn der Reifen nicht auf der Felge montiert ist, ein Punkt H ist ein Schnittpunkt zwischen einem Felgenflansch und der Felgenbasis, ein Punkt D ist ein Punkt, an dem ein Liniensegment AH bei 7 : 3 geteilt wird, ein Punkt J ist ein willkürlicher Punkt auf einem Liniensegment AD, ein Punkt F ist ein Schnittpunkt zwischen einer Geraden, die durch den Punkt J hindurchgeht, wobei sie sich senkrecht zu der Felgenbasis du der Wulstbasis erstreckt, X ist eine Länge eines Liniensegments AB und Y ist eine Länge eines Liniensegments JF, eine Beziehung, die gegeben ist durch

$$Y \geq 0,9\ X,$$

in einem gesamten Bereich des Liniensegments AD erfüllt ist.

**Revendications**

1. Pneumatique radial pour charge lourde (10, 40) comprenant :

   une carcasse (14) repliée au centre d'une tringle (12) ; et
   un tablier métallique (22) agencé sur une circonférence extérieure de la carcasse (14) et repliée autour du centre de la tringle (12) ;
   **caractérisé en ce que**
   une couche de caoutchouc de renfort (24) présentant un module d'élasticité inférieur à au moins un d'un caoutchouc de revêtement formant la carcasse (14) et d'un caoutchouc de revêtement formant le tablier métallique (22) est agencée entre la carcasse (14) et le tablier métallique (22) ; et **en ce que**
   une zone dans laquelle la couche de caoutchouc de renfort (24) est agencée est une zone correspondant à au moins une partie d'une gamme d'angles de rotation (θ) comprise entre -45° et 90° autour d'un centre de tringle (12c) vers l'extérieur dans une direction de la largeur d'un pneu relativement à une ligne droite (L) s'étendant vers l'intérieur dans une direction radiale du pneu (C) depuis le centre de la tringle (12c), coupant perpendiculairement à la direction de la largeur du pneu, et coupant le tablier métallique (22), dans lequel 0° indique la position de la partie sous-jacente du tablier métallique (22b) et l'angle de rotation (θ) autour du centre de la tringle (12c) depuis la partie sous-jacente du tablier métallique (22b) vers un intérieur du pneu (I) est indiqué par un signe moins.

2. Pneumatique radial pour charge lourde selon la revendication 1, dans lequel les angles de rotation couvrent une zone totale correspondant à une gamme comprise entre 45° et 80°.

3. Pneumatique radial pour charge lourde selon la revendication 1 ou 2, dans lequel la couche de caoutchouc de renfort (24) comprend un élément de caoutchouc présentant un module d'élasticité dans une plage comprise entre 8 MPa et 14 MPa à 300 % d'allongement, et
une épaisseur de la couche de caoutchouc de renfort est établie à au moins 0,5 mm ou plus excepté pour les parties d'extrémité.

4. Pneumatique radial pour charge lourde selon l'une quelconque des revendications 1 à 3, dans lequel une couche de renfort extérieure (28) formée à partir d'un matériau de caoutchouc présentant un module d'élasticité dans une plage comprise entre 8 Mpa et 14 MPa à 300 % d'allongement est agencée sur une circonférence extérieure du tablier métallique, une épaisseur de la couche de renfort extérieure est établie à au moins 1,0 mm ou plus excepté pour les parties d'extrémité, et la couche de renfort extérieure est séparée d'une base de tringle d'au moins 1 mm ou plus.

5. Pneumatique radial pour charge lourde selon la revendication 4, dans lequel des câbles en fibre organique sont agencés à l'intérieur de la couche de renfort extérieure ou entre le tablier métallique et la couche de renfort extérieure.

6. Pneumatique radial pour charge lourde selon l'une quelconque des revendications 1 à 5, dans lequel avec un point A comme point d'intersection entre une ligne perpendiculaire tirée perpendiculairement à la base de jante depuis le centre de la tringle lorsque le pneu est assemblé à la jante et la base de jante, un point B comme point d'intersection entre la ligne perpendiculaire et la base de tringle lorsque le pneu n'est pas assemblé à la jante, un point H comme point d'intersection entre une bride de jante et la base de jante, un point D comme point auquel un segment de ligne AH est divisé à 7 : 3, un point J comme un point arbitraire sur un segment de ligne AD, un point F comme un point d'intersection entre une ligne droite passant à travers le point J s'étendant perpendiculairement à la base de jante et la base de tringle, X étant une longueur d'un segment de ligne AB, et Y étant une longueur d'un segment de ligne JF, une relation donnée par

$$Y \geq 0,9\,X$$

est satisfaite dans une gamme complète du segment de ligne AD.

# FIG. 1

16(10)

14r

14

24e

28i

24i

RF

12

22

12c

22e

E

θ

I

28e

24

20

26

t

18

LG

28

30

22b

RB

L

C

# FIG. 2

|  | CONVENTIONAL EXAMPLE 1 | EXAMPLE 1 |
|---|---|---|
| REINFORCING RUBBER LAYER BETWEEN CARCASS AND WIRE CHAFER | ABSENT | PRESENT |
| SHEAR STRAIN NEAR BOUNDARY SURFACE BETWEEN RUBBER CHAFER AND WIRE CHAFER IN BEAD HEEL PORTION | 100 | 87 |

# FIG. 3

SHEAR STRAIN IN WIRE CHAFER IN CODE DIRECTION

— CONVENTIONAL EXAMPLE 2
— EXAMPLE 2

PERIPHERY LENGTH OF WIRE CHAFER [mm]
(BEAD CORE UNDERNEATH PORTION BEING ORIGIN)

# FIG. 4

# FIG. 5

# FIG. 6

| | CONVENTIONAL EXAMPLE 3 | EXAMPLE 3 |
|---|---|---|
| BEAD-BASE TIGHTENING-MARGIN AGAINST RIM BASE AT D-POINT POSITION | 3.20mm | 8.35mm |
| FITTING FORCE BETWEEN TIRE BEAD-BASE AND RIM-BASE | 100 | 111 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1911607 A1
- JP 2000233613 A
- JP 2001206027 A
- JP 2015102517 A

### Non-patent literature cited in the description

- JATMA YEAR BOOK. THE JAPAN AUTOMOBILE TIRE MANUFACTURERS ASSOCIATION
- YEAR BOOK. THE TIRE AND RIM ASSOCIATION INC,
- STANDARD MANUAL. The European Tyre and Rim Technical Organisation